# EUROPEAN PATENT APPLICATION

(11) **EP 4 474 730 A1**
(43) Date of publication of application: **11.12.2024**
(21) Application number: 22924587.3
(22) Date of filing: 23.12.2022
(51) Int. Cl.: F25B 9/06, F25B 9/14

(54) **GIFFORD-MCMAHON (GM) REFRIGERATOR FIRST-STAGE DISPLACER, FIRST-STAGE DISPLACER ASSEMBLY, AND GIFFORD-MCMAHON REFRIGERATOR**

(30) Priority: 04.02.2022 JP 2022016394
(71) Applicant: Sumitomo Heavy Industries, Ltd., Tokyo 141-6025 (JP)
(72) Inventor: KAWAKAMI Hisao, Nishitokyo-shi Tokyo 188-8585 (JP)
(74) Representative: Louis Pöhlau Lohrentz
(86) International application number: PCT/JP2022/047707
(87) International publication number: WO 2023/149130

(57) **Abstract**

The present invention relates to a first-stage displacer (24) of a Gifford- McMahon (GM) cryocooler. The first-stage displacer (24) includes: a first-stage displacer main body (26); an upper cap (25) attached to an upper end of the first-stage displacer main body (26) and formed of a metallic material; and at least one piston seal (50) mounted on a side surface of the upper cap (25). A plurality of piston seals (50) may be mounted on the side surface of the upper cap (25).

## Description

### Technical Field

The present invention relates to a first-stage displacer of a Gifford-McMahon (GM) cryocooler, and a Gifford-McMahon cryocooler provided with the first-stage displacer.

### Background Art

In general, a sealing member is mounted on an upper end portion of a first-stage displacer of a GM cryocooler in order to prevent a refrigerant gas from leaking through a gap between a displacer and a cylinder.

### Citation List

### Patent Literature

[PTL 1] Japanese Unexamined Patent Publication No. 2007-205608

### Summary of Invention

### Technical Problem

A first-stage displacer of the GM cryocooler is usually formed of a synthetic resin material such as a cloth-filled phenol resin, and a sealing member is fitted into a peripheral groove carved in the synthetic resin material. The sealing member can provide desired sealing performance by bringing the clearance between the sealing member and the groove within a range defined in the design.

The first-stage displacer may be stored in an inappropriate environment. In this case, the dimensions of the peripheral groove, such as a width or a depth, may change due to various factors such as water absorption or a temperature change in the synthetic resin material. In a case where the groove dimension exceeds the allowable range, a gas may leak between the groove and the sealing member, and the sealing performance may be lowered. On the contrary, in a case where the groove is narrowed, the sealing member strongly adheres to the surface of the synthetic resin material in the groove, so that the pushing force from the sealing member to the cylinder is weakened, and a gas may leak at the contact surface between the sealing member and the cylinder.

One exemplary object of an aspect of the present invention is to stabilize the sealing performance of a first-stage displacer of a GM cryocooler.

### Solution to Problem

An aspect of the present invention relates to a first-stage displacer of a Gifford-McMahon (GM) cryocooler. The first-stage displacer includes: a first-stage displacer main body; a metal upper cap attached to an upper end of the first-stage displacer main body and formed of a metal material; and at least one piston seal mounted on a side surface of the metal upper cap.

Another aspect of the present invention relates to a GM cryocooler. The GM cryocooler includes: the first-stage displacer according to the above aspect.

Another aspect of the present invention relates to a first-stage displacer assembly of a Gifford-McMahon (GM) cryocooler. The first-stage displacer assembly includes: a displacer drive shaft; and the first-stage displacer according to the above aspect. A metal upper cap is attached to the upper end of a first-stage displacer main body such that the displacer drive shaft is connected to the first-stage displacer.

Another aspect of the present invention relates to a GM cryocooler. The GM cryocooler includes: the first-stage displacer assembly according to the above aspect.

### Advantageous Effects of Invention

According to the present invention, it is possible to stabilize the sealing performance of the first-stage displacer of the GM cryocooler.

### Brief Description of Drawings

Fig. 1 is a diagram schematically showing a cryocooler according to an embodiment.
Fig. 2 is a sectional view schematically showing a part (upper portion) of a first-stage displacer of the cryocooler shown in Fig. 1.
Figs. 3A and 3B are perspective views schematically showing an upper cap and a piston seal of the first-stage displacer shown in Fig. 2, respectively.
Fig. 4 is a perspective view schematically showing another example of the upper cap of the first-stage displacer.
Fig. 5 is a sectional view schematically showing another example of the part (upper portion) of the first-stage displacer.

### Description of Embodiments

Hereinafter, embodiments for carrying out the present invention will be described in detail with reference to the drawings. In the description and drawings, identical or equivalent components, members, and processing are denoted by the same reference numerals, and overlapping description is omitted as appropriate. The scale or shape of each part that is shown in the drawings is conveniently set for ease of description and is not limitedly interpreted unless otherwise specified. The embodiments are exemplary and do not limit the scope of the present invention in any way. All features or combinations thereof described in the embodiments are not essential to the invention.

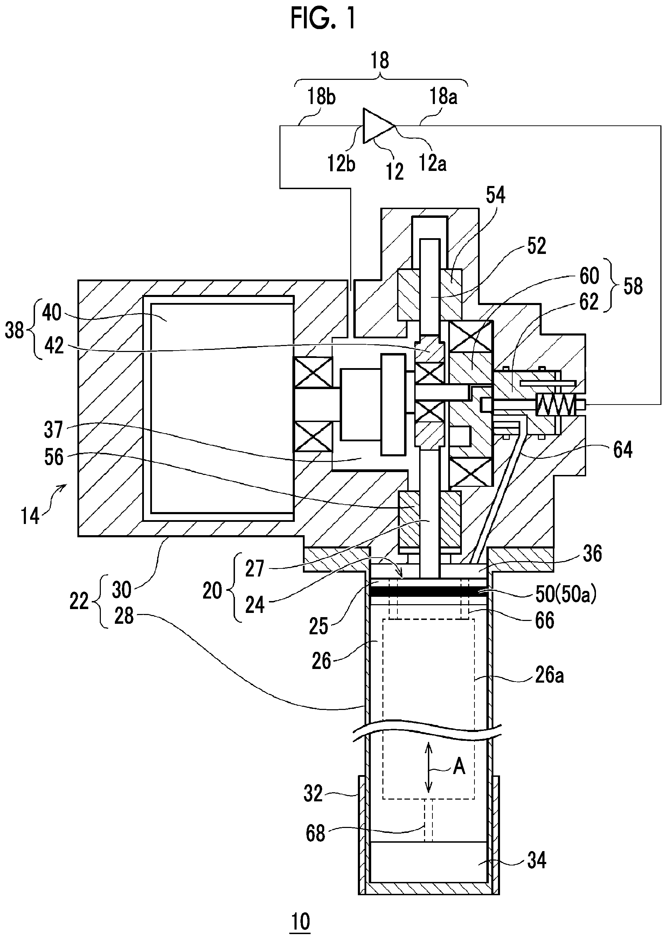

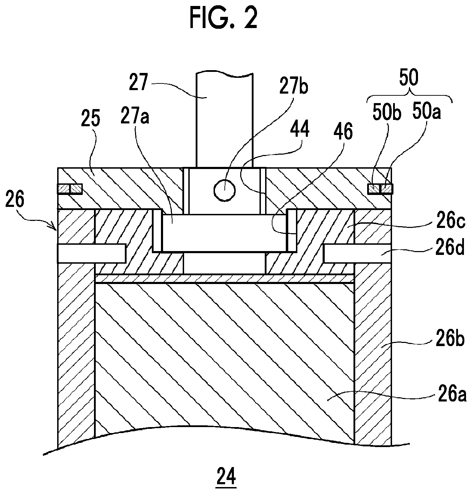

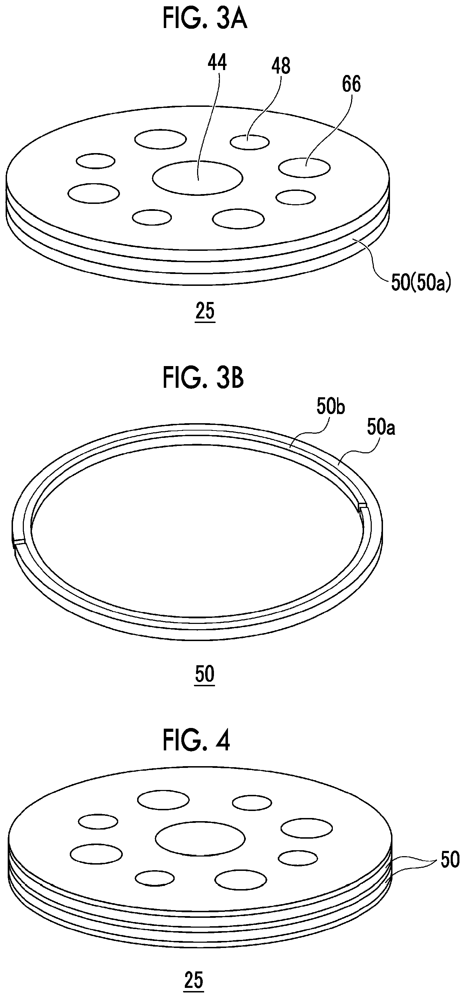

Fig. 1 is a diagram schematically showing a cryocooler according to an embodiment. Fig. 2 is a sectional view schematically showing a part (upper portion) of a first-stage displacer of the cryocooler shown in Fig. 1. Figs. 3A and 3B are perspective views schematically showing an upper cap and a piston seal of the first-stage displacer shown in Fig. 2, respectively.

A cryocooler 10 includes a compressor 12 that compresses a working gas (also referred to as a refrigerant gas) and an expander 14 that cools the working gas by adiabatic expansion. The working gas is, for example, a helium gas. The expander 14 is also referred to as a cold head. The cryocooler 10 includes a gas pipe 18 that includes a first pipe 18a and a second pipe 18b, which connect the compressor 12 and the expander 14 to each other. The cryocooler 10 shown in the drawing is a single-stage GM cryocooler.

As is known, the working gas having a first high pressure is supplied from a discharge port 12a of the compressor 12 to the expander 14 through the first pipe 18a. Due to the adiabatic expansion in the expander 14, the working gas is depressurized from the first high pressure to a second high pressure lower than the first high pressure. The working gas having the second high pressure is recovered from the expander 14 to a suction port 12b of the compressor 12 through the second pipe 18b. The compressor 12 compresses the recovered working gas having the second high pressure. In this way, the working gas is raised in pressure to the first high pressure again. In general, both the first high pressure and the second high pressure are significantly higher than the atmospheric pressure. For convenience of description, the first high pressure and the second high pressure are also simply referred to as high pressure and low pressure, respectively. In general, the high pressure is, for example, in a range of 2 to 3 MPa, and the low pressure is, for example, in a range of 0.5 to 1.5 MPa. A differential pressure between the high pressure and the low pressure is, for example, in a range of about 1.2 to 2 MPa.

The expander 14 includes an expander movable portion 20 and an expander stationary portion 22. In the present specification, for convenience of description, terms of an axial direction, a radial direction, and a circumferential direction are used. The axial direction represents a movement direction (an up-down direction in Fig. 1) of the expander movable portion 20 with respect to the expander stationary portion 22, as shown by an arrow A. The radial direction represents a direction (a lateral direction in the drawing) perpendicular to the axial direction, and the circumferential direction represents a direction surrounding the axial direction. Therefore, the expander movable portion 20 is configured to be capable of reciprocating in the axial direction with respect to the expander stationary portion 22, and the expander stationary portion 22 is configured to support the expander movable portion 20 to be capable of reciprocating in the axial direction. In addition, the expander stationary portion 22 is configured as a hermetic container that accommodates the expander movable portion 20 together with a high-pressure gas (including a first high-pressure gas and a second high-pressure gas) .

The expander movable portion 20 includes a first-stage displacer (hereinafter, also simply referred to as a displacer) 24 and a displacer drive shaft 27 that drives the reciprocating movement of the displacer 24. The displacer 24 includes an upper cap 25 and a displacer main body 26, and is connected to the displacer drive shaft 27 via the upper cap 25.

The upper cap 25 of the displacer 24 is an upper lid of the displacer 24, and is attached to an upper end of the displacer main body 26. The upper cap 25 has a disk shape and is formed of a metal material or another material. The upper cap 25 may be formed of an aluminum alloy subjected to alumite treatment. The upper cap 25 may be formed of stainless steel. The upper cap 25 and the displacer main body 26 may be fixed to each other by, for example, a fastening member such as a bolt (or by other methods such as bonding).

Although details will be described later, a piston seal 50 is mounted on a side surface (an outer peripheral surface) of the upper cap 25.

As shown in Fig. 2, the displacer main body 26 includes a regenerator material 26a and a displacer cylinder 26b. The regenerator material 26a may be formed by laminating a large number of circular wire meshes formed of a high heat conductive metal material such as copper (for example, pure copper) in the axial direction. The displacer cylinder 26b is a container that accommodates the regenerator material 26a, and has a cylindrical shape extending in the axial direction. The outer diameter of the displacer cylinder 26b is equal to the outer diameter of the upper cap 25, and the cylindrical outer shape of the displacer 24 is defined by the upper cap 25 and the displacer cylinder 26b. The displacer cylinder 26b is formed of a synthetic resin material or another material. The displacer cylinder 26b may be formed of, for example, a cloth-filled phenol resin.

In addition, the displacer main body 26 includes a displacer inner lid 26c that is fixed to the displacer cylinder 26b so as to press the regenerator material 26a in the axial direction. The displacer inner lid 26c is disposed at an end portion of the displacer cylinder 26b, and is accommodated in the displacer cylinder 26b together with the regenerator material 26a. The displacer inner lid 26c may be fixed to the displacer cylinder 26b by a fixing pin 26d penetrating the displacer cylinder 26b in the radial direction from the outer peripheral surface of the displacer cylinder 26b. A flow straightening layer formed of at least one wire mesh having a different wire diameter and/or mesh from the wire mesh as the regenerator material 26a may be provided between the displacer inner lid 26c and the regenerator material 26a.

A collar portion 27a extending to the radial outer side is attached to a tip (a lower end in the axial direction) of the displacer drive shaft 27. The collar portion 27a has a circular shape having a diameter larger the diameter of the shaft when viewed in the axial direction of the shaft. The displacer drive shaft 27 and the collar portion 27a may be connected to each other by a connecting pin 27b penetrating the displacer drive shaft 27 and the collar portion 27a in the radial direction. The displacer drive shaft 27, the collar portion 27a, and the connecting pin 27b are formed of a metal material such as stainless steel, for example, or another material.

An insertion hole 44 through which the displacer drive shaft 27 passes is formed at the center of the upper cap 25, and a center hole 46 that receives the collar portion 27a is formed in the displacer inner lid 26c. The displacer drive shaft 27 is connected to the displacer 24 by sandwiching the collar portion 27a between the upper cap 25 and the displacer inner lid 26c.

As shown in Fig. 1, the expander stationary portion 22 has a two-part configuration roughly composed of an expander cylinder 28 and a drive mechanism housing 30. An axial upper portion of the expander stationary portion 22 is the drive mechanism housing 30, an axial lower portion of the expander stationary portion 22 is the expander cylinder 28, and the drive mechanism housing 30 and the expander cylinder 28 are tightly coupled to each other. The expander cylinder 28 is configured to extend in the axial direction from the drive mechanism housing 30 and to guide the reciprocating movement of the displacer 24. The expander cylinder 28 has a substantially uniform inner diameter in the axial direction, and thus, the expander cylinder 28 has a substantially cylindrical inner surface extending in the axial direction. The inner diameter is slightly larger than the outer diameter of the displacer 24.

In addition, the expander stationary portion 22 includes a cryocooler stage 32. The cryocooler stage 32 is fixed to the end of the expander cylinder 28 on a side opposite to the drive mechanism housing 30 in the axial direction. The cryocooler stage 32 is provided to conduct the coldness generated by the expander 14 to another object. The object is attached to the cryocooler stage 32 and is cooled by the cryocooler stage 32 when the cryocooler 10 is operated. The cryocooler stage 32 is also sometimes referred to as a cooling stage or a heat load stage.

The cryocooler 10 is typically installed with the cryocooler stage 32 facing downward and the drive mechanism housing 30 facing upward, as shown in Fig. 1. However, the cryocooler 10 may be installed in another posture, and for example, the cryocooler 10 may be installed with the cryocooler stage 32 facing upward and the drive mechanism housing 30 facing downward. Alternatively, the expander 14 may be installed such that the axial direction thereof coincides with the horizontal direction.

The expander cylinder 28 is partitioned into an expansion space 34 and an upper space 36 by the displacer 24. The displacer 24 defines the expansion space 34 at the end portion of the expander cylinder 28 on the cryocooler stage 32 side, and defines the upper space 36 at the end portion of the expander cylinder 28 on the drive mechanism housing 30 side. The volumes of the expansion space 34 and the upper space 36 are complementarily varied by the relative movement of the displacer 24 with respect to the expander cylinder 28. The expansion space 34 has a maximum volume at the top dead center of the displacer 24, and has a minimum volume at the bottom dead center of the displacer 24. The upper space 36 has a minimum volume at the top dead center of the displacer 24 and has a maximum volume at the bottom dead center of the displacer 24.

When the cryocooler 10 is operated, the expander 14 has an axial temperature distribution in which the upper space 36 is a high-temperature portion and the expansion space 34 is a low-temperature portion. The high-temperature portion has, for example, a temperature of about room temperature. The low-temperature portion is cooled to a certain temperature included in a range of, for example, about 100 K to about 10 K, although it is different depending on the use of the cryocooler 10.

The expander 14 includes a displacer drive mechanism 38 that is supported by the expander stationary portion 22 and drives the displacer 24. The displacer drive mechanism 38 includes a motor 40 such as an electric motor, for example, and a Scotch yoke mechanism 42. The displacer drive mechanism 38 is accommodated in a low-pressure gas chamber 37 that is defined inside the drive mechanism housing 30 adjacent to the upper space 36. The second pipe 18b is connected to the drive mechanism housing 30, and thereby, the low-pressure gas chamber 37 communicates with a suction port 12b of the compressor 12 through the second pipe 18b. Therefore, the low-pressure gas chamber 37 is always maintained at low pressure.

The displacer drive shaft 27 is connected to the Scotch yoke mechanism 42 so as to be driven in the axial direction by the Scotch yoke mechanism 42, and forms a part of the Scotch yoke mechanism 42. The displacer drive shaft 27 extends from the low-pressure gas chamber 37 to the displacer 24 by penetrating the upper space 36. The displacer drive shaft 27 has a diameter smaller than the diameter of the displacer 24, and for example, the diameter of the displacer drive shaft 27 is smaller than half of the diameter of the displacer 24.

A first sliding bearing 54 and a second sliding bearing 56 are provided in the drive mechanism housing 30 of the expander stationary portion 22. An upper rod 52 of the Scotch yoke mechanism 42 is supported by the first sliding bearing 54 to be movable in the axial direction, and the displacer drive shaft 27 is supported by the second sliding bearing 56 to be movable in the axial direction. Therefore, the upper rod 52, the displacer drive shaft 27, and the Scotch yoke mechanism 42 are configured to be movable in the axial direction.

A seal portion such as a slipper seal or a clearance seal, for example, is provided at a lower end portion of the second sliding bearing 56 or the drive mechanism housing 30, and is configured to be airtight. Therefore, the low-pressure gas chamber 37 is isolated from the upper space 36. There is no direct gas flow between the low-pressure gas chamber 37 and the upper space 36.

The Scotch yoke mechanism 42 reciprocates in the axial direction by the rotation of an output shaft of the motor 40. Therefore, the Scotch yoke mechanism 42 moves in the axial direction, so that the displacer 24 reciprocates in the axial direction in the expander cylinder 28.

The expander 14 includes a rotary valve 58 configured to switch between the intake and the exhaust of the expansion space 34 in synchronization with the axial reciprocation of the displacer 24 by the rotation of the motor 40, and thereby to control the pressure of the expansion space 34. The rotary valve 58 includes a rotor valve member 60 supported to be rotatable in the drive mechanism housing 30, and a stator valve member 62 fixed inside the drive mechanism housing 30. The rotor valve member 60 is connected to a rotary shaft of the motor 40, and rotates with respect to the stator valve member 62 by the rotation of the rotary shaft. The rotor valve member 60 is in surface contact with the stator valve member 62 so as to rotate and slide with respect to the stator valve member 62. The stator valve member 62 is configured to receive the high-pressure gas entering the drive mechanism housing 30 from the first pipe 18a. The intake and the exhaust of the expansion space 34 can be switched by the rotation of the rotor valve member 60 with respect to the stator valve member 62. Since various known flow path configurations can be adopted for the rotary valve 58, the flow path configuration will not be described in detail.

A housing gas flow path 64 for a gas flow between the rotary valve 58 and the upper space 36 is formed in the drive mechanism housing 30. In addition, a displacer upper lid gas flow path 66 is formed in an upper end portion of the displacer 24 for a gas flow between the upper space 36 and the regenerator material 26a in the displacer 24. The displacer upper lid gas flow path 66 may be formed to penetrate the upper cap 25 and the displacer inner lid 26c. A displacer lower lid gas flow path 68 is formed in a lower end portion of the displacer 24 for a gas flow between the expansion space 34 and the regenerator material 26a in the displacer 24.

Figs. 3A and 3B are perspective views schematically showing the upper cap 25 and the piston seal 50, respectively. In this embodiment, as described above, the piston seal 50 is mounted on the upper cap 25.

As shown in Figs. 2, 3A, and 3B, the piston seal 50 includes a piston ring 50a and a tension ring 50b adjacent to the radial inner side of the piston ring 50a. The piston ring 50a is formed of, for example, a fluororesin such as polytetrafluoroethylene, or another synthetic resin material having excellent sliding properties and/or durability. The tension ring 50b is formed of a metal material such as stainless steel, for example, or other materials.

The piston seal 50 is fitted into a peripheral groove formed on the side surface of the upper cap 25, and is held by the upper cap 25. The piston ring 50a on the radial outer side is pressed against the inner peripheral surface of the expander cylinder 28 by the tension of the tension ring 50b on the radial inner side. The piston ring 50a slides on the inner peripheral surface of the expander cylinder 28 when the displacer 24 reciprocates in the axial direction. In this way, the clearance between the outer peripheral surface of the displacer 24 and the inner peripheral surface of the expander cylinder 28 is sealed by the piston seal 50, and a direct gas flow between the upper space 36 and the expansion space 34 through the clearance (that is, a gas flow that bypasses the regenerator material 26a) is blocked.

In Fig. 3A, there are shows the insertion hole 44, the displacer upper lid gas flow path 66, and a bolt hole 48, which penetrate the upper cap 25 in the axial direction. As described above, the insertion hole 44 is formed at the center of the upper cap 25 to receive the displacer drive shaft 27. A plurality of the displacer upper lid gas flow paths 66 are provided to surround the insertion hole 44, and are disposed at equal angular intervals in the circumferential direction. In this example, the four displacer upper lid gas flow paths 66 are provided in the upper cap 25. The bolt holes 48 are also provided to surround the insertion hole 44, and are disposed at equal angular intervals in the circumferential direction. In this example, the four bolt holes 48 are disposed alternately with the displacer upper lid gas flow path 66 in the circumferential direction at the same radial position as the displacer upper lid gas flow path 66.

The configuration of the cryocooler 10 according to the embodiment has been described above. Next, the operation of the cryocooler 10 will be described. When the displacer 24 is located at or in the vicinity of the bottom dead center, the rotary valve 58 is switched to connect a discharge port 12a of the compressor 12 to the expansion space 34, and an intake process of the refrigeration cycle is started. The high-pressure gas flows from the rotary valve 58 to the regenerator material 26a in the displacer 24 through the housing gas flow path 64, the upper space 36, and the displacer upper lid gas flow path 66. The gas is cooled while passing through the regenerator material 26a, and enters the expansion space 34 through the displacer lower lid gas flow path 68. While the gas flows into the expansion space 34, the displacer 24 moves upward in the axial direction in the expander cylinder 28 from the bottom dead center toward the top dead center by the displacer drive shaft 27. Accordingly, the volume of the expansion space 34 is increased. In this way, the expansion space 34 is filled with the high-pressure gas.

When the displacer 24 is at or in the vicinity of the top dead center, the rotary valve 58 is switched to connect the suction port 12b of the compressor 12 to the expansion space 34, and an exhaust process of the refrigeration cycle is started. At this time, the high-pressure gas in the expansion space 34 expands and is cooled. The expanded gas flows from the expansion space 34 into the regenerator material 26a in the displacer 24 through the displacer lower lid gas flow path 68. The gas is cooled while passing through the regenerator material 26a. The gas returns from the regenerator material 26a to the compressor 12 through the upper space 36, the housing gas flow path 64, the rotary valve 58, and the low-pressure gas chamber 37. While the gas flows out from the expansion space 34, the displacer 24 moves downward in the axial direction from the top dead center toward the bottom dead center in the expander cylinder 28 by the displacer drive shaft 27. Accordingly, the volume of the expansion space 34 is reduced, and the low-pressure gas is discharged from the expansion space 34. When the exhaust process is ended, the intake process is started again.

The above is one refrigeration cycle in the cryocooler 10. The cryocooler 10 cools the cryocooler stage 32 to a desired temperature by repeating the refrigeration cycle. Therefore, the cryocooler 10 can cool an object thermally coupled to the cryocooler stage 32 to a cryogenic temperature.

Incidentally, in an existing GM cryocooler, in general, a sealing member provided at an upper end portion of the first-stage displacer is mounted on a tubular portion of the first-stage displacer, that is, a peripheral groove formed in a portion of a synthetic resin material such as a cloth-filled phenol resin. For example, due to various factors such as water absorption or a temperature change in the synthetic resin material caused by the influence of a storage environment or the like of the first-stage displacer, the dimensions of the peripheral groove such as a width or a depth may change, and the sealing performance of the sealing member may be affected.

In a case where the groove dimension exceeds the allowable range in the design, a gas may leak between the groove and the sealing member, and the sealing performance may be lowered. On the contrary, in a case where the groove is narrowed, the sealing member strongly adheres to the surface of the synthetic resin material in the groove, so that the pushing force from the sealing member to the cylinder is weakened, and a gas may leak at the contact surface between the sealing member and the cylinder.

In addition, the first-stage displacer is incorporated in the GM cryocooler, and is then used for a long period of time, so that the sealing performance may be lowered due to the abrasion of the sealing member.

According to the embodiment, the piston seal 50 is mounted on the upper cap 25 made of metal. In the upper cap 25 made of metal, it is easier to process the peripheral groove with high accuracy, compared to the displacer cylinder 26b made of a synthetic resin material. In addition, even after long-term use, the upper cap 25 made of metal is unlikely to change in groove dimension. Therefore, the sealing performance of the first-stage displacer of the GM cryocooler can be stably maintained for a long period of time.

In addition, in the existing GM cryocooler, a combination of a sealing ring, which is also referred to as a slipper seal, and an O-ring is often used as a sealing member at the upper end of the first-stage displacer. The sealing ring is pressed against the inner peripheral surface of the cylinder by an elastic restoring force outward in the radial direction from the O-ring compressed in the radial direction. As the sealing ring is abraded due to long-term use and the radial thickness thereof is reduced, the pushing force from the O-ring against the sealing ring is also weakened, and the sealing performance may be lowered.

In contrast, in the embodiment, the piston seal 50 is used. Compared to the slipper seal, the sealing performance of the piston seal 50 is less likely to be affected by abrasion due to long-term use. This also helps to stabilize the sealing performance of the first-stage displacer in the long term.

Fig. 4 is a perspective view schematically showing another example of the upper cap 25 of the displacer 24. As shown in the drawing, a plurality of piston seals 50 may be mounted on the side surface (the outer peripheral surface) of the upper cap 25. In this example, two piston seals 50 are disposed in the axial direction (up and down in the drawing). A plurality of peripheral grooves are formed in the side surface of the upper cap 25, and each piston seal 50 is fitted into a corresponding peripheral groove, as with the embodiment described above. In this manner, the plurality of piston seals 50 are provided, so that the sealing performance can be further enhanced.

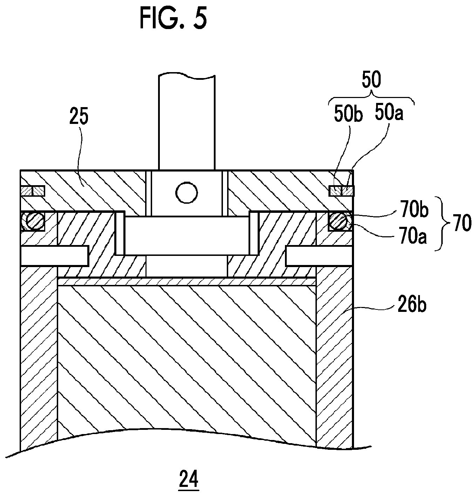

Fig. 5 is a sectional view schematically showing another example of a part (upper portion) of the displacer 24. As shown in the drawing, in addition to the piston seal 50 mounted on the upper cap 25, the displacer 24 may include an additional sealing member 70 that is mounted between the upper cap 25 and the displacer cylinder 26b.

The sealing member 70 may be a so-called slipper seal that includes a sealing ring 70a and a back ring 70b adjacent to the radial inner side of the sealing ring 70a. The sealing ring 70a is formed of, for example, a fluororesin such as polytetrafluoroethylene, or another synthetic resin material having excellent sliding properties and/or durability. The back ring 70b may be, for example, an O-ring or another ring made of synthetic rubber. The sealing member 70 may be, for example, another contact seal such as an O-ring, instead of the slipper seal.

The sealing member 70 is accommodated in a peripheral groove formed in the upper end of the displacer cylinder 26b, and is sandwiched between the upper cap 25 and the displacer cylinder 26b. The sealing ring 70a is pressed against the inner peripheral surface of the expander cylinder 28 by the back ring 70b, and the sealing member 70 can seal a gas between the outer peripheral surface of the displacer 24 and the inner peripheral surface of the expander cylinder 28. In this manner, the sealing member 70 is added, so that the sealing performance can be further enhanced.

The present invention has been described above based on the examples. It will be understood by those skilled in the art that the present invention is not limited to the above embodiments, various design changes can be made, various modification examples are possible, and such modification examples are also within the scope of the present invention. Various features described in relation to an embodiment are also applicable to other embodiments. New embodiments resulting from combinations have the effect of each of embodiments which are combined.

In the above description, the embodiment has been described with reference to the single-stage GM cryocooler. The present invention is not limited thereto, and the seal structure according to the embodiment is also applicable to a first-stage displacer of a two-stage or multi-stage GM cryocooler.

The present invention has been described using specific terms and phrases, based on the embodiments. However, the embodiments show only one aspect of the principles and applications of the present invention, and in the embodiments, many modifications or disposition changes are permitted within a scope which does not depart from the ideas of the present invention defined in the claims.

### Industrial Applicability

The present invention can be used in the field of Gifford-McMahon (GM) cryocoolers.

### Reference Signs List

- 10: cryocooler
- 24: displacer
- 25: upper cap
- 26: displacer main body
- 26a: regenerator material
- 26b: displacer cylinder
- 50: piston seal
- 70: sealing member

## Claims

1. A first-stage displacer of a Gifford-McMahon (GM) cryocooler, comprising:
a first-stage displacer main body;
a metal upper cap attached to an upper end of the first-stage displacer main body and formed of a metal material; and
at least one piston seal mounted on a side surface of the metal upper cap.

2. The first-stage displacer according to claim 1, wherein the metal upper cap has a peripheral groove formed in the metal material on the side surface thereof, and the piston seal is disposed in the peripheral groove.

3. The first-stage displacer according to claim 1, further comprising:
a plurality of the piston seals mounted on the side surface of the metal upper cap.

4. The first-stage displacer according to claim 3,
wherein the metal upper cap has a plurality of peripheral grooves formed in the metal material on the side surface thereof, and each of the plurality of piston seals is disposed in a corresponding peripheral groove among the plurality of peripheral grooves.

5. The first-stage displacer according to any one of claims 1 to 4,
wherein the first-stage displacer main body includes a regenerator material, and a first-stage displacer cylinder that accommodates the regenerator material.

6. The first-stage displacer according to claim 5, further comprising:
a sealing member mounted between the metal upper cap and the first-stage displacer cylinder.

7. The first-stage displacer according to claim 6,
wherein the first-stage displacer cylinder is formed of a synthetic resin material.

8. A Gifford-McMahon (GM) cryocooler comprising:
the first-stage displacer according to any one of claims 1 to 7.

9. A first-stage displacer assembly of a Gifford-McMahon (GM) cryocooler, comprising:
a displacer drive shaft; and
the first-stage displacer according to any one of claims 1 to 7,
wherein the metal upper cap is attached to the upper end of the first-stage displacer main body such that the displacer drive shaft is connected to the first-stage displacer.

10. The first-stage displacer assembly according to claim 9,
wherein the displacer drive shaft includes a collar portion at a tip thereof, and
the collar portion is sandwiched between the first-stage displacer main body and the metal upper cap in a state where the displacer drive shaft is inserted into an insertion hole of the metal upper cap.

11. A Gifford-McMahon (GM) cryocooler comprising:
the first-stage displacer assembly according to claim 9 or 10.
